(19)

**Europäisches Patentamt**

**European Patent Office**

**Office européen des brevets**

(11) **EP 4 027 293 A1**

(12) **EUROPEAN PATENT APPLICATION**

(43) Date of publication:
**13.07.2022 Bulletin 2022/28**

(21) Application number: **21382921.1**

(22) Date of filing: **13.10.2021**

(51) International Patent Classification (IPC):
**G06Q 40/06** *(2012.01)*

(52) Cooperative Patent Classification (CPC):
**G06Q 40/06**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.01.2021 US 202117147142**

(71) Applicant: **Multiverse Computing S.L.**
**20014 Donostia-San Sebastian (ES)**

(72) Inventors:
• **Orús, Román**
  **Donostia-San Sebastian (ES)**
• **Mugel, Samuel**
  **Toronto (CA)**

(74) Representative: **Balder IP Law, S.L.**
  **Paseo de la Castellana 93**
  **5ª planta**
  **28046 Madrid (ES)**

(54) **METHODS AND APPARATUSES FOR OPTIMAL DECISION WITH QUANTUM DEVICE**

(57) A method comprising solving, by a quantum device, a QUBO problem defined by an equation with a cost function for optimization of trading trajectories of an asset portfolio based on historical financial data for a first period of time, providing a quantum or classical machine learning algorithm that provides a recommended composition of an asset portfolio based on a set of inputs, training the algorithm with financial data for a second period of time, and providing a recommended portfolio composition for the second period of time by running the trained machine learning algorithm.

EP 4 027 293 A1

**Description**

**TECHNICAL FIELD**

The present invention relates to the field of quantum devices. More particularly, the present invention relates to methods and apparatuses that solve an optimization problem and provide information about an improved or optimal decision to be made based on the solution to the optimization problem.

**STATE OF THE ART**

The appearance and continued development of quantum devices has made possible to solve complex computing problems, or to solve them in time spans shorter than solving times required by classical computing devices, e.g. in less than a decade, a year, etc. An example of such computing problems are optimization problems like quadratic unconstrained binary optimization, whose minimization is NP-Hard.

US-10691771-B2 describes a method for generating an embedding pattern used for solving an Integer Linear Programming problem using a Physical Ising Machine. EP-3664099-A1 describes methods and systems for allocating items in an exchange system, which results in the definition of an exchange problem, using quantum computing resources. US-9152746-B2 describes a quantum annealer simulator; with the simulator, a classical computer simulates the unitary dynamics of a quantum annealer for finding the solution to optimization problems.

European patent application no. 20383046, which is hereby incorporated by reference in its entirety, discloses methods and apparatuses for operating Gaussian Boson Sampling quantum devices as annealers.

However, the result of an optimization problem sometimes is not enough to make a decision regarding a particular problem like, for instance, which investments have to be made to improve the returns of an asset portfolio.

**DESCRIPTION OF THE INVENTION**

A first aspect of the present disclosure relates to a method comprising: digitally providing a quadratic unconstrained binary optimization problem defined by an equation with a cost function for optimization of trading trajectories of an asset portfolio; digitally introducing a first set of data into the problem, the first set of data comprising historical financial data for a first period of time, the historical financial data at least comprising prices of considered assets; solving the quadratic unconstrained binary optimization, i.e. QUBO, problem for the first period of time with a quantum device, thereby obtaining optimal trading trajectories for the first period of time; digitally providing a quantum or classical machine learning algorithm that provides a recommended composition of an asset portfolio based on a set of inputs; digitally training the machine learning algorithm by both inputting the optimal trading trajectories obtained by the quantum device for the first period of time and minimizing a predetermined error function (such as linear, quadratic, or exponential) for each time unit of the first period of time for which there is historical financial data in the first set of data; digitally introducing a second set of data into the machine learning algorithm, the second set of data comprising financial data for a second period of time that is posterior to the first period of time (either both the initial and final times that define the second period time are posterior to the final time that defines the first period of time, or at least the final time that defines the second period of time is posterior to the final time that defines the first period of time), the financial data at least comprising prices of the considered assets; and digitally providing a recommended portfolio composition for the second period of time by running the trained machine learning algorithm with the second set of data introduced therein.

One or more computing devices and a quantum device carry out the method of the present disclosure. The method enables improved or even optimal decision-making, in particular when it comes to the composition of an asset portfolio, based on optimal trading trajectories for past periods of time. The historical financial data, which comprises actual records and values that are already known, is used for solving the QUBO related to the optimization of trading trajectories and for training the machine learning algorithm; the machine learning algorithm outputs a recommended portfolio composition for the second period of time when complete financial data for such period of time is not available, namely, there is no complete historical financial data for the second period of time yet. Thus, inputs of the machine learning algorithm preferably comprise (1) previous optimal trading trajectories and (2) other relevant financial data available corresponding to the second period of time (i.e. the second set of data is introduced in inputs of the algorithm); in addition to prices, the financial data may include news or other information relative to the value of the corresponding assets. The recommended portfolio composition is the portfolio composition that the machine learning algorithm considers to be optimal in accordance with the data inputted thereto and yields a positive trading trajectory.

The second period of time may be open-ended, for example it may correspond to the present day or a period of time encompassing a plurality of days including the present day, and the method is carried out during the present day. Accordingly, value of assets may change during the same day and after carrying out the method; likewise, the financial data of the second set of data may or may not include all the financial data available by the time the method is carried out. This means that the financial data is not complete at that point in time. In some cases, the second period of time is not open-ended, for example it may correspond to the previous day, that is to say, yesterday, a day before yesterday, or a period of time encompassing a plurality of days including yesterday and/or a day before yesterday. Also, in these other cases the financial data may not be complete either. In the context of the present disclosure, historical financial data should be understood as a set of financial data that is complete for the related period of time with actual records and values for the respective assets.

Owing to the capabilities of quantum devices, the quantum device solves the QUBO problem whilst classical computing devices typically cannot, or the timeframe for a classical computing device to solve the problem is excessive for ultimately producing an output that is to be used in a decision-making process, in this case a recommended portfolio composition. Preferably, the first period of time and/or the first set of data are/is selected such that the time it takes for the quantum device to solve the QUBO problem is less than the second period of time; this could also be achieved by an equation with cost function with fewer variables or lower complexity so that solving the QUBO problem takes less time.

The equation with the cost function can be provided for the definition of the QUBO problem by means of, for instance, at least one of: user input means (e.g. keyboard, touchscreen, voice recognition, etc.) of a computing device where the problem is being provided; a computer-readable medium having the equation stored therein and providing it to the computing device upon connection of the medium thereto; transmitted to the computing device from a remote computing device, for example through a wired communications link or a wireless communications link, etc. The cost function includes a plurality of binary variables; upon solving the cost function, an optimal trading trajectory is obtained.

In some embodiments, the method further comprises, after historical financial data is available for the second period of time: digitally introducing a third set of data into the problem, the third set of data comprising historical financial data for the second period of time, the historical financial data at least comprising prices of the considered assets; solving the quadratic unconstrained binary optimization problem for the second period of time with the quantum device, thereby obtaining optimal trading trajectories for the second period of time; digitally training the machine learning algorithm by both inputting the optimal trading trajectories obtained by the quantum device for the second period of time and minimizing a predetermined error function for each time unit of the second period of time for which there is historical financial data in the third set of data; digitally introducing a fourth set of data into the machine learning algorithm, the fourth set of data comprising financial data for a third period of time that is posterior to the second period of time (either both the initial and final times that define the third period time are posterior to the final time that defines the second period of time, or at least the final time that defines the third period of time is posterior to the final time that defines the second period of time), the financial data at least comprising prices of the considered assets; and digitally providing a recommended portfolio composition for the third period of time by running the trained machine learning algorithm with the fourth set of data introduced therein. In some embodiments, this sequence is repeated one or more times when there is historical financial data for the latest period of time -that for which the recommended portfolio composition is provided- so as to sequentially solve the QUBO problem for that period of time, train the machine learning algorithm with the corresponding optimal trading trajectories for said latest period of time, introduce a more recent set of data with financial data for a more recent period of time, and provide a recommended portfolio composition for said more recent period of time.

The method enables the sequential provision of recommended portfolio compositions every time more recent historical financial data becomes available. Accordingly, when historical financial data exists for the second period of time, the second period of time with its respective historical financial data can be incorporated into the QUBO problem. The quantum device solves the QUBO problem for such period of time, thereby providing optimal trading trajectories for it. This output, namely the optical trading trajectories provided by the quantum device, are fed to the machine learning algorithm for training the algorithm with these additional optimal trading trajectories. The machine learning algorithm ultimately provides recommended portfolio compositions for subsequent periods of time when historical financial data are not available for them, yet, as aforesaid, previous periods of time are provided in the QUBO and then in the training of the machine learning algorithm to have more knowledge for the algorithm to determine a recommended portfolio composition.

In some embodiments, the method further comprises digitally commanding making one or more investments based on the recommended portfolio composition provided. In some embodiments, the digital commanding takes place every time recommended portfolio compositions are provided.

Whenever the machine learning algorithm recommends a portfolio composition, investments to be made may be derived from both the recommended composition and a current asset portfolio possessed by a person or an entity. The investments are then placed, for example on the Internet, in this way this process is automated and the times are reduced, which in turn reduces the amount that the value of the assets has changed from the method has been carried out and from the moment the algorithm has determined the recommended portfolio composition. In order to avoid the possibility of making investments when the value of the assets has changed significantly and, thus, the investments are not worth making, one or more predetermined thresholds can be set up in advance and the investments are only commanded when the difference between the current value of the assets and the recommended value of the assets exceeds or does not exceed -depending on how the threshold is set- the predetermined threshold or thresholds, or the difference is within a range defined by e.g. two predetermined thresholds.

In some embodiments, the digital steps are carried out with one or more computing devices.

A second aspect of the present disclosure relates to an apparatus comprising: a quantum device; and one or more computing devices communicatively coupled with the quantum device. The one or more computing devices are configured to at least cause the apparatus to: provide a quadratic unconstrained binary optimization problem defined by an equation with a cost function for optimization of trading trajectories of an asset portfolio; and introduce a first set of data into the problem, the first set of data comprising historical financial data for a first period of time, the historical financial data at least comprising prices of considered assets. The quantum device is configured to at least cause the apparatus to solve the quadratic unconstrained binary optimization problem for the first period of time, thereby obtaining optimal trading trajectories for the first period of time. And the one or more computing devices are configured to at least cause the apparatus to: provide a quantum or classical machine learning algorithm that provides a recommended composition of an asset portfolio based on a set of inputs; train the machine learning algorithm by both inputting both the optimal trading trajectories obtained by the quantum device for the first period of time and minimizing a predetermined error function for each time unit of the first period of time for which there is historical financial data in the first set of data; introduce a second set of data into the machine learning algorithm, the second set of data comprising financial data for a second period of time that is posterior to the first period of time, the financial data at least comprising prices of the considered assets; and provide a recommended portfolio composition for the second period of time by running the trained machine learning algorithm with the second set of data introduced therein.

The one or more computing devices may be provided with a plurality of computing modules for causing the apparatus to perform these tasks and the tasks of embodiments described throughout the present disclosure, or be provided with one or more processors, one or more memory units, and one or more computer programs stored therein that perform the tasks upon execution by the one or more processors.

In some embodiments, the one or more computing devices are configured to at least further cause the apparatus to, after historical financial data is available for the second period of time, introduce a third set of data into the problem, the third set of data comprising historical financial data for the second period of time, the historical financial data at least comprising prices of the considered assets; the quantum device is configured to at least further cause the apparatus to, after historical financial data is available for the second period of time, solve the quadratic unconstrained binary optimization problem for the second period of time, thereby obtaining optimal trading trajectories for the second period of time; and the one or more computing devices are configured to at least further cause the apparatus to, after historical financial data is available for the second period of time: train the machine learning algorithm by both inputting the optimal trading trajectories obtained by the quantum device for the second period of time and minimizing a predetermined error function for each time unit of the second period of time for which there is historical financial data in the third set of data; introduce a fourth set of data into the machine learning algorithm, the fourth set of data comprising financial data for a third period of time that is posterior to the second period of time, the financial data at least comprising prices of the considered assets; and provide a recommended portfolio composition for the third period of time by running the trained machine learning algorithm with the fourth set of data introduced therein. In some embodiments, this sequence is repeated one or more times when more recent financial data is available.

In some embodiments, the one or more computing devices are configured to at least further cause the apparatus to command making one or more investments based on the recommended portfolio composition provided. In some embodiments, the apparatus is commanded to make the one or more investments every time recommended portfolio compositions are provided.

A third aspect of the present disclosure relates to a computer program or a non-transitory computer-readable medium encoded with instructions that, when executed by at least one processor or hardware, make an apparatus to at least perform the following: providing a quadratic unconstrained binary optimization problem defined by an equation with a cost function for optimization of trading trajectories of an asset portfolio; introducing a first set of data into the problem, the first set of data comprising historical financial data for a first period of time, the historical financial data at least comprising prices of considered assets; providing the quadratic unconstrained binary optimization problem for the first period of time to a quantum device for solving of the problem by the quantum device; providing a quantum or classical machine learning algorithm that provides a recommended composition of an asset portfolio based on a set of inputs; training the machine learning algorithm by both inputting optimal trading trajectories outputted by the quantum device for the first period of time and minimizing a predetermined error function for each time unit of the first period of time for which there is historical financial data in the first set of data; introducing a second set of data into the machine learning algorithm, the second set of data comprising financial data for a second period of time that is posterior to the first period of time the financial data at least comprising prices of the considered assets; and providing a recommended portfolio composition for the second period of time by running the trained machine learning algorithm with the second set of data introduced therein.

In some embodiments, the instructions further make the apparatus to at least perform the following, after historical financial data is available for the second period of time: introducing a third set of data into the problem, the third set of data comprising historical financial data for the second period of time, the historical financial data at least comprising prices of the considered assets; providing the quadratic unconstrained binary optimization problem for the second period of time to the quantum device for solving of the problem by the quantum device; training the machine learning algorithm by both inputting the optimal trading trajectories obtained by the quantum device for the second period of time and minimizing a predetermined error function for each time unit of the second period of time for which there is historical financial data in the third set of data; introducing a fourth set of data into the machine learning algorithm, the fourth set of data comprising financial data for a third period of time that is posterior to the second period of time, the financial data at least comprising prices of the considered assets; and providing a recommended portfolio composition for the third period of time by running the trained machine learning algorithm with the fourth set of data introduced therein. In some embodiments, this sequence is repeated one or more times when more recent financial data is available.

In some embodiments, the instructions further make the apparatus to at least perform commanding making one or more investments based on the recommended portfolio composition provided. In some embodiments, the apparatus is commanded to make the one or more investments every time recommended portfolio compositions are provided.

A fourth aspect of the present disclosure relates to a non-transitory computer-readable medium encoded with instructions that, when executed by at least one processor or hardware, perform or make an apparatus to perform the steps of a method according to the first aspect of the invention.

**BRIEF DESCRIPTION OF THE DRAWINGS**

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

Figure 1 diagrammatically shows an apparatus in accordance with embodiments.
Figure 2 diagrammatically shows a method in accordance with embodiments.
Figure 3 shows a diagram representing how portfolio compositions are recommended in accordance with embodiments.

**DESCRIPTION OF WAYS OF CARRYING OUT THE INVENTION**

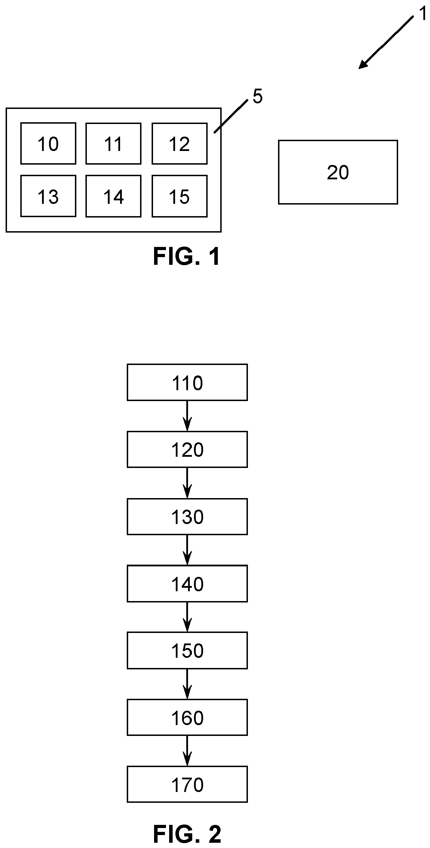

Figure 1 diagrammatically shows an apparatus 1 in accordance with embodiments. Methods according to the present disclosure can be carried out by such an apparatus 1.

The apparatus 1 comprises one or more computing devices 5, and a quantum device 20. The one or more computing devices 5 are communicatively coupled with the quantum device 20, either electrically via a wired communications link or via a wireless communications link. To this end, the computing device or devices 5 comprise a communications module for establishing communications with the quantum device 20, in wired or wireless form. The communications module may be provided with a converter for adapting electrical signals of the computing device into light for example when the quantum device 20 is photonic, or into another type of signals that the quantum device 20 is adapted to receive. The quantum device 20 could be provided with such a converter as well, or one or more external converters could be arranged between the communications module of the computing device(s) 5 and the quantum device 20.

In this example and other examples, the one or more computing devices 5 comprise a number of modules 10-15 for performing certain tasks for operation of the apparatus 1. Each module 10-15 is a processing module that comprises a computer program, and further comprises or is communicatively coupled with at least one processing unit and at least one memory unit for running the computer program. When more than one computing device 5 is arranged, each computing device 5 is provided with a subset of modules, thus it is not necessary that each computing device 5 includes all the modules. By way of example, in one embodiment a first computing device 5 comprises first and second modules 10-11, and a second computing device comprises third, fourth, fifth and sixth modules 12-15. In other examples, the one or more computing devices 5 are provided with one or more processors, one or more memory units, and one or more computer programs that perform the same tasks.

The first module 10 is a module for providing a quadratic unconstrained binary optimization problem provision module. The second module 11 is a module for introducing a set of data with historical financial data for a first period of time into the problem provided by the first module 10. The third module 12 is a module for providing a quantum or classical machine learning algorithm that outputs a recommended composition of an asset portfolio. The fourth module 13 is a module for training the machine learning algorithm provided by the third module; the module trains the algorithm by inputting optimal trading trajectories for a given period of time whilst minimizing a predetermined error function. The fifth module 14 is a module for introducing a set of data with financial data for a second period of time into the machine learning algorithm provided by the third module 12. And the sixth module 15 is a module for providing a recommended portfolio composition for the second period of time by running the machine learning algorithm provided by the third module 12, trained with the fourth module 13, and with data introduced by the fifth module 14.

The quantum device 20 solves the quadratic unconstrained binary optimization problem provided by the first module 10, and with data introduced by the second module 11. The output of the quantum device 20 is processed by the third module 12.

The quantum device 20 preferably comprises one of: a quantum annealer, a hybrid quantum-classical machine, a universal gate-based quantum computer, or a Gaussian Boson Sampling quantum device.

The one or more computing devices 5 comprise one or more of: a computer processing unit, a graphics processing unit, and a field-programmable gate array.

Figure 2 diagrammatically shows a method in accordance with embodiments.

The method, which takes place in apparatuses such as the one described with reference to Figure 1, includes a step whereby a computing device or a module thereof provides 110 a QUBO problem defined by an equation with a cost function. The cost function is for optimization of trading trajectories of an asset portfolio and is e.g. $H = \sum_{t_i}^{t_f} A$, where $t_i$ and $t_f$ are initial and final trading (rebalancing) times, respectively; in this sense, t takes values $t_i$, $t_{i+1}$, ..., up to $t_f$.

In some examples, A at least comprises the following terms (that is to say, A is equal to the following terms or includes additional terms):

$$-\mu_t^T w_t + \frac{\gamma}{2} w_t^T \Sigma_t w_t + v_t |\Delta w_t|$$

where $w_t$ is a vector the components of which are the percentages of each asset in the portfolio at time t, $\mu_t$ is a vector of expected returns at time t, $\gamma$ is a parameter controlling the volatility of the portfolio, $\Sigma_t$ is a matrix of covariances of the returns at time t, $v_t$ is a percentage of transaction costs, $\Delta w_t$ is a change in the composition of the vector of assets between time t and time t+1.

In some examples, A at least comprises the following terms (that is to say, A is equal to the following terms or includes additional terms):

$$-\mu_t^T w_t + \frac{\gamma}{2} w_t^T \Sigma_t w_t + v_t |\Delta w_t| + w_t \Lambda_t \Delta w_t$$

where the different terms are as in the previous example but the last one $\Lambda_t$ corresponds to a matrix of market impact at time t.

In some examples, A includes additional terms for constraints and/or normalizations.

The method further includes a step whereby a computing device -or the computing device or a module thereof- or a module thereof introduces 120 a first set of data into the QUBO problem. The first set of data includes historical financial data for a first period of time.

The method further includes a step whereby a quantum device solves 130 the QUBO problem for the first period of time. In this way, optimal trading trajectories for the first period of time are obtained. The optimal trading trajectories can be obtained for one, some or each time unit of the first period of time for which there is historical financial data in the first set of data; this means that if the first period of time encompasses e.g. one month, but there is historical financial data for e.g. fifteen days of the month, the optical trading trajectories are obtained for one, some or each day of the fifteen days. The time unit can be a predetermined number of minutes, hours, days, or even weeks.

The method further includes a step whereby a computing device -or the computing device or a module thereof- or a module thereof provides 140 a quantum or classical machine learning algorithm. The algorithm is adapted to provide a recommended composition of an asset portfolio based on a set of inputs.

In some embodiments, the machine learning algorithm comprises a neural network or a variational quantum circuit. The neural network may be a neural network comprising a given number of intermediate layers and a given number of neurons for each layer, or comprising several hidden layers of neurons; such neural network could be trained using for instance a backpropagation algorithm. The variational quantum circuit may comprise several qubits coupled via entangling gates and including one-qubit gates with variational parameters to be optimized using, for instance, a conjugate gradient algorithm.

The method further includes a step whereby a computing device -or the computing device or a module thereof- or a module thereof trains 150 the machine learning algorithm. A predetermined error function is used effecting the training of the algorithm; hence the algorithm aims to minimize said function. The algorithm receives, as inputs, optimal trading trajectories for the first period of time resulting from solving the QUBO problem and gets trained using based on the predetermined error function for each time unit of the first period of time for which there is historical financial data in the first set of data.

The method further includes a step whereby a computing device -or the computing device or a module thereof- or a module thereof introduces 160 a second set of data into the machine learning algorithm. The second set of data includes financial data for a second period of time that is posterior to the first period of time.

The method further includes a step whereby a computing device -or the computing device or a module thereof- or a module thereof runs the trained machine learning algorithm with the second set of data introduced therein and provides 170 a recommended portfolio composition for the second period of time.

In some embodiments, for the provision 110 and the solving 130 of the QUBO problem, and as described in European patent application no. 20383046, in the case of a Gaussian Boson Sampling quantum device the method may include: converting an integer programming formulation of the cost function equation into a Boolean formula in Conjunctive Normal Form comprising a clause for each term of the cost function that includes at least one binary variable; obtaining a Max-Clique problem by processing the Boolean formula; providing the Max-Clique problem to a quantum device; and processing output data of the quantum device after the step of providing the Max-Clique problem so as to find values of the binary variables of the cost function.

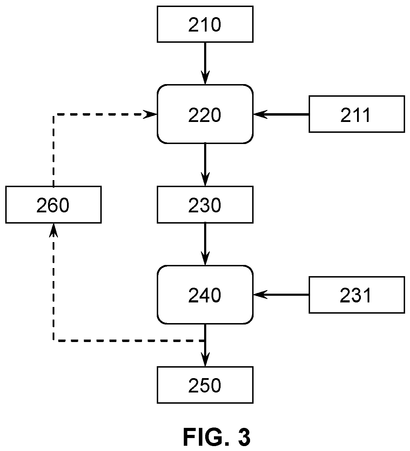

Figure 3 shows a diagram representing how portfolio compositions are recommended in accordance with embodiments.

A set of historical financial data corresponding to a given period of time -e.g. a first period of time- is provided 210. Said financial data is used in a process 220 for computing optimal trading trajectories for that given period of time based on the data. The process 220 can be understood as a sequence of steps taking place in one or more computing devices and a quantum device to produce such optimal trading trajectories by solving a QUBO problem - as described, for instance, with reference to the method of Figure 2-, and can also be understood as an optimization module that processes the historical financial data provided 210 and outputs the optimal trading trajectories.

A risk tolerance can be provided 211 for the process 220 to take into account, this means that the process 220 computes the optimal trading trajectories over the given period of time maximizing the return for the risk tolerance provided 211, and at the same time taking into account one or more other possible constraints like, for example, transactions costs, market impact, minimal holding period, among others. The risk tolerance is included in the cost function and/or the QUBO problem that is solved during the process 220.

The process 220 provides 230 optimal trading trajectories based on the inputs provided 210, 211. Said trading trajectories provided 230 are used in a process 240 for recommending an asset portfolio composition for a period of time -e.g. a second period of time- not encompassed in the given period of time of the historical financial data, and that is posterior to said given period of time. The process 240 can be understood as a sequence of steps taking place in one or more computing devices to produce such recommendation by using a machine learning algorithm -as described, for instance, with reference to the method of Figure 2-, and can also be understood as a recommendation module that processes the optimal trading trajectories provided 230 and outputs the recommendation. Hence, the process 240 assists in the decision-making in the field of assets portfolios for a period of time for which no historical financial data is yet available, or not available for the entirety of the period of time. To this end, the machine learning algorithm provided is trained during the process 240 with the optimal trading trajectories and provides 250 the recommendation for the second period of time upon providing 231 financial data for said second period of time to the process 240.

The first period of time comprises, for example, a plurality of days and the second period of time comprises one day -but could likewise include a plurality of days, or hours, or minutes, etc.- that is posterior to the plurality of days; the one day could be today or yesterday, for example. Accordingly, the historical financial data for that plurality of days is provided 210 to the optimization process 220 and, preferably, a risk tolerance is also provided 211. The optimization process 220 provides 230 the optimal trading trajectories for each day of the plurality of days for which historical financial data is available, and the trajectories are used by the recommendation process 240 for training the machine learning algorithm. The recommendation process 240 recommends a portfolio composition for the one day of the second period of time when financial data for said one day is provided 231.

In some embodiments, the recommendation process 240 provides 250 a plurality of recommended portfolio compositions, each for a different period of time. To this end, when historical financial data becomes available 260 for the second period of time, something that typically occurs after recommendation for the second period of time has been provided 250, then the historical financial data for the second period of time is introduced in the optimization process 220 -illustrated with dashed lines for the sake of clarity only-. The optimization process 220, in turn, provides 230 the optimal trading trajectories for the second period of time. The recommendation process 240 uses these subsequent optimal trading trajectories for training the machine learning algorithm. Then, the recommendation process 240 is to provide 250 a recommended portfolio composition for a third period of time upon providing 231 financial data for it. It is noted that the third period of time is posterior to the second period of time and, preferably, is not encompassed by the second period of time.

Accordingly, every time historical financial data becomes available for the period of time for which the last recommendation has been made, this process can be repeated. By way of example, every time a day passes, a period of time including -or consisting of- either the present day or the day before, historical financial data may be available for the days preceding said period of time, thus the sequence is repeated in order to provide 250 a recommendation for the period of time including -or consisting of- either the present day or the day before.

In this text, the term "comprises" and its derivations -such as "comprising", etc.- should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art -for example, as regards the choice of materials, dimensions, components, configuration, etc.-, within the general scope of the invention as defined in the claims.

**Claims**

1. A method comprising:

   digitally providing a quadratic unconstrained binary optimization problem defined by an equation with a cost function for optimization of trading trajectories of an asset portfolio;
   digitally introducing a first set of data into the problem, the first set of data comprising historical financial data for a first period of time, the historical financial data at least comprising prices of considered assets;
   solving the quadratic unconstrained binary optimization problem for the first period of time with a quantum device, thereby obtaining optimal trading trajectories for the first period of time;
   digitally providing a quantum or classical machine learning algorithm that provides a recommended composition of an asset portfolio based on a set of inputs;
   digitally training the machine learning algorithm by both inputting the optimal trading trajectories obtained by the quantum device for the first period of time and minimizing a predetermined error function for each time unit of the first period of time for which there is historical financial data in the first set of data;
   digitally introducing a second set of data into the machine learning algorithm, the second set of data comprising financial data for a second period of time that is posterior to the first period of time, the financial data at least comprising prices of the considered assets; and
   digitally providing a recommended portfolio composition for the second period of time by running the trained machine learning algorithm with the second set of data introduced therein.

2. The method of claim 1, further comprising, after historical financial data is available for the second period of time:

   digitally introducing a third set of data into the problem, the third set of data comprising historical financial data for the second period of time;

solving the quadratic unconstrained binary optimization problem for the second period of time with the quantum device, thereby obtaining optimal trading trajectories for the second period of time;
digitally training the machine learning algorithm by both inputting the optimal trading trajectories obtained by the quantum device for the second period of time and minimizing a predetermined error function for each time unit of the second period of time for which there is historical financial data in the third set of data;
digitally introducing a fourth set of data into the machine learning algorithm, the fourth set of data comprising financial data for a third period of time that is posterior to the second period of time; and
digitally providing a recommended portfolio composition for the third period of time by running the trained machine learning algorithm with the fourth set of data introduced therein.

3. The method of any one of the preceding claims, further comprising digitally commanding making one or more investments based on the recommended portfolio composition provided.

4. The method of any one of the preceding claims, wherein the machine learning algorithm comprises a neural network or a variational quantum circuit.

5. The method of any one of the preceding claims, wherein the cost function is $H = \sum_{t_i}^{t_f} A$, where $A$ at least comprises the following terms $-\mu_t^T w_t + \frac{\gamma}{2} w_t^T \Sigma_t w_t + v_t |\Delta w_t|$ or at least comprises the following terms $-\mu_t^T w_t + \frac{\gamma}{2} w_t^T \Sigma_t w_t + v_t |\Delta w_t| + w_t \Lambda_t \Delta w_t$, where $w_t$ is a vector the components of which are the percentages of each asset in the portfolio at time t, $\mu_t$ is a vector of expected returns at time t, $\gamma$ is a parameter controlling the volatility of the portfolio, $\Sigma_t$ is a matrix of covariances of the returns at time t, $v_t$ is a percentage of transaction costs, $\Delta w_t$ is a change in the composition of the vector of assets between time t and time t+1, $\Lambda_t$ is a matrix of market impact at time t, and $t_i$ and $t_f$ are an initial time and a final time of a respective period of time.

6. The method of any one of the preceding claims, wherein the quantum device comprises one of: a quantum annealer, a hybrid quantum-classical machine, a universal gate-based quantum computer, or a Gaussian Boson Sampling quantum device.

7. The method of any one of the preceding claims, wherein the digital steps are carried out with one or more computing devices.

8. The method of claim 7, wherein the one or more computing devices comprise one or more of: a computer processing unit, a graphics processing unit, and a field-programmable gate array.

9. The method of any one of the preceding claims, wherein the first period of time comprises a plurality of days and the second period of time comprises one day, and preferably the one day of the second period of time is today or yesterday.

10. An apparatus comprising:

a quantum device; and
one or more computing devices communicatively coupled with the quantum device;
the one or more computing devices being configured to at least cause the apparatus to:

provide a quadratic unconstrained binary optimization problem defined by an equation with a cost function for optimization of trading trajectories of an asset portfolio; and introduce a first set of data into the problem, the first set of data comprising historical financial data for a first period of time, the historical financial data at least comprising prices of considered assets;

the quantum device being configured to at least cause the apparatus to solve the quadratic unconstrained binary optimization problem for the first period of time, thereby obtaining optimal trading trajectories for the first period of time; and
the one or more computing devices being configured to at least further cause the apparatus to:

provide a quantum or classical machine learning algorithm that provides a recommended composition of an asset portfolio based on a set of inputs;
train the machine learning algorithm by both inputting the optimal trading trajectories obtained by the quantum device for the first period of time and minimizing a predetermined error function for each time unit of the first period of time for which there is historical financial data in the first set of data;
introduce a second set of data into the machine learning algorithm, the second set of data comprising financial data for a second period of time that is posterior to the first period of time, the financial data at least comprising prices of the considered assets; and
provide a recommended portfolio composition for the second period of time by running the trained machine learning algorithm with the second set of data introduced therein.

11. The apparatus of claim 10, wherein:

the one or more computing devices are configured to at least further cause the apparatus to, after historical financial data is available for the second period of time, introduce a third set of data into the problem, the third set of data comprising historical financial data for the second period of time;
the quantum device is configured to at least further cause the apparatus to, after historical financial data is available for the second period of time, solve the quadratic unconstrained binary optimization problem for the second period of time, thereby obtaining optimal trading trajectories for the second period of time; and
the one or more computing devices are configured to at least further cause the apparatus to, after historical financial data is available for the second period of time:

train the machine learning algorithm by both inputting the optimal trading trajectories obtained by the quantum device for the second period of time and minimizing a predetermined error function for each time unit of the second period of time for which there is historical financial data in the third set of data;
introduce a fourth set of data into the machine learning algorithm, the fourth set of data comprising financial data for a third period of time that is posterior to the second period of time; and
provide a recommended portfolio composition for the third period of time by running the trained machine learning algorithm with the fourth set of data introduced therein.

12. The apparatus of any one of the preceding claims, wherein the machine learning algorithm comprises a neural network or a variational quantum circuit.

13. The apparatus of any one of the preceding claims, wherein the cost function is $H = \sum_{t_i}^{t_f} A$, where $A$ at least comprises the following terms

$$-\mu_t^T w_t + \frac{\gamma}{2} w_t^T \Sigma_t w_t + v_t |\Delta w_t|$$ or at least comprises the following terms

$$-\mu_t^T w_t + \frac{\gamma}{2} w_t^T \Sigma_t w_t + v_t |\Delta w_t| + w_t \Lambda_t \Delta w_t \quad,$$

where $w_t$ is a vector the components of which are the percentages of each asset in the portfolio at time t, $\mu_t$ is a vector of expected returns at time t, $\gamma$ is a parameter controlling the volatility of the portfolio, $\Sigma_t$ is a matrix of covariances of the returns at time t, $v_t$ is a percentage of transaction costs, $\Delta w_t$ is a change in the composition of the vector of assets between time t and time t+1, $\Lambda_t$ is a matrix of market impact at time t, and $t_i$ and $t_f$ are an initial time and a final time of a respective period of time.

14. The apparatus of any one of the preceding claims, wherein the quantum device comprises one of: a quantum annealer, a hybrid quantum-classical machine, a universal gate-based quantum computer, or a Gaussian Boson Sampling quantum device.

15. A computer program comprising instructions which, when the program is executed by at least one processor, cause the at least one processor to carry out the following:

   providing a quadratic unconstrained binary optimization problem defined by an equation with a cost function for optimization of trading trajectories of an asset portfolio;
   introducing a first set of data into the problem, the first set of data comprising historical financial data for a first period of time, the historical financial data at least comprising prices of considered assets;
   providing the quadratic unconstrained binary optimization problem for the first period of time to a quantum device for solving of the problem by the quantum device;
   providing a quantum or classical machine learning algorithm that provides a recommended composition of an asset portfolio based on a set of inputs;
   training the machine learning algorithm by both inputting optimal trading trajectories outputted by the quantum device for the first period of time and minimizing a predetermined error function for each time unit of the first period of time for which there is historical financial data in the first set of data;
   introducing a second set of data into the machine learning algorithm, the second set of data comprising financial data for a second period of time that is posterior to the first period of time, the financial data at least comprising prices of the considered assets; and
   providing a recommended portfolio composition for the second period of time by running the trained machine learning algorithm with the second set of data introduced therein.

1

5

| 10 | 11 | 12 |
| 13 | 14 | 15 |

20

**FIG. 1**

110

120

130

140

150

160

170

**FIG. 2**

**FIG. 3**

Europäisches
Patentamt
European
Patent Office
Office européen
des brevets

# EUROPEAN SEARCH REPORT

Application Number

EP 21 38 2921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 3 664 099 A1 (ACCENTURE GLOBAL SOLUTIONS LTD [IE]) 10 June 2020 (2020-06-10) * paragraph [0007] – paragraph [0030] * * paragraph [0034] – paragraph [0049] * * figures 1, 2 * | 1-15 | INV. G06Q40/06 |
| X | WO 2020/232546 A1 (XANADU QUANTUM TECH INC [CA]) 26 November 2020 (2020-11-26) * paragraph [1014] – paragraph [1017] * * paragraph [1102] * * figure 1 * | 1-15 | |
| X | US 2020/334107 A1 (KATABARWA AMARA [US]) 22 October 2020 (2020-10-22) * paragraph [0092] – paragraph [0097] * * paragraph [0122] – paragraph [0127] * * figures 2B, 3 * | 1-15 | |
| X | US 2017/364362 A1 (LIDAR DANIEL [US] ET AL) 21 December 2017 (2017-12-21) * paragraph [0075] – paragraph [0086] * * figure 4 * | 1-15 | TECHNICAL FIELDS SEARCHED (IPC) G06Q |

The present search report has been drawn up for all claims

| Place of search | Date of completion of the search | Examiner |
|---|---|---|
| The Hague | 8 March 2022 | Nicoli, Félix |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 38 2921

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2022

| Patent document cited in search report | | Publication date | Patent family member(s) | | Publication date |
|---|---|---|---|---|---|
| EP 3664099 | A1 | 10-06-2020 | CN 111260109 A | | 09-06-2020 |
| | | | EP 3664099 A1 | | 10-06-2020 |
| | | | US 10592816 B1 | | 17-03-2020 |
| | | | US 2020175413 A1 | | 04-06-2020 |
| WO 2020232546 | A1 | 26-11-2020 | CA 3139835 A1 | | 26-11-2020 |
| | | | CN 113853563 A | | 28-12-2021 |
| | | | EP 3973366 A1 | | 30-03-2022 |
| | | | US 2022051124 A1 | | 17-02-2022 |
| | | | WO 2020232546 A1 | | 26-11-2020 |
| US 2020334107 | A1 | 22-10-2020 | CA 3133917 A1 | | 22-10-2020 |
| | | | EP 3956770 A1 | | 23-02-2022 |
| | | | US 2020334107 A1 | | 22-10-2020 |
| | | | WO 2020214910 A1 | | 22-10-2020 |
| US 2017364362 | A1 | 21-12-2017 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10691771 B2
- EP 3664099 A1
- US 9152746 B2
- EP 20383046 A